(19) Europäisches Patentamt / European Patent Office / Office européen des brevets

(11) **EP 3 409 701 A1**

(12) **EUROPEAN PATENT APPLICATION**

(43) Date of publication:
**05.12.2018 Bulletin 2018/49**

(21) Application number: **17173808.1**

(22) Date of filing: **31.05.2017**

(51) Int Cl.:
*C08F 255/02* [(2006.01)]  *C08F 230/08* [(2006.01)]
*C08K 5/54* [(2006.01)]  *C08L 23/14* [(2006.01)]
*C08L 51/06* [(2006.01)]  *C08J 3/24* [(2006.01)]
*C08L 23/16* [(2006.01)]  *C08K 5/5425* [(2006.01)]
*C08K 5/14* [(2006.01)]

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Borealis AG**
**1220 Vienna (AT)**

(72) Inventors:
• **Wang, Jingbo**
**4040 Linz (AT)**
• **Bernreitner, Klaus**
**4010 Linz (AT)**

• **Ek, Carl-Gustav**
**426 58 Västra Frölunda (SE)**
• **Steiner, Lisa Maria**
**4280 Königswiesen (AT)**
• **Hubner, Gerhard**
**4075 Breitenaich (AT)**
• **Hartikainen, Juha**
**06530 Kerkkoo (FI)**
• **Ruskeeniemi, Jari-Jussi**
**06100 Porvoo (FI)**

(74) Representative: **Lux, Berthold**
**Maiwald Patentanwalts- und**
**Rechtsanwaltsgesellschaft mbH**
**Elisenhof**
**Elisenstraße 3**
**80335 München (DE)**

(54) **A CROSSLINKABLE PROPYLENE POLYMER COMPOSITION**

(57) The invention relates to a process for the preparation of a crosslinkable propylene polymer composition comprising melt mixing and reacting, preferably in an extruder, a heterophasic propylene copolymer composition A, at least one crosslinkable grafting component B represented by the formula $R^1SiR^2_qY_{3-q}$ and a radical initiator C. The invention also relates to the moisture crosslinkable polypropylene polymer composition obtainable by the process, to a crosslinked propylene polymer composition, to the use of the crosslinkable composition for the manufacture of adhesives, sealant, films, foams, coatings or shaped articles and the use of the crosslinked propylene polymer composition in food packaging, medical devices, textile packaging, technical films and protection films.

EP 3 409 701 A1

**Description**

The present invention relates to crosslinkable propylene polymer compositions, to a process for their preparation, to crosslinked propylene polymer compositions, to the use of said compositions for the manufacture of foams, sealants, adhesives, coatings or shaped articles and to the use in food packaging, textile packaging and technical and protection films.

Currently available compositions for soft, flexible and strong products are for example flexible polyurethanes for which the mechanical properties are easily tuned in view of the envisaged application properties with proper choosing of type and amounts of the rigid/soft segments. However, flexible polyurethanes raise Health, Safety and Environment (HSE) concerns concerning residuals of some monomers. Especially the isocyanates used as monomers in the production of polyurethane are irritant to the mucous membranes of the eyes and gastrointestinal and respiratory tracts. Respiratory and dermal exposures to isocyanates may lead to sensitization. Therefore, the removal of isocyanates from foamed products is an important goal in that technical field.

There is an increasing desire to replace such polyurethanes with Polypropylene, which does not have any HSE concerns. It is inert to the human body and is used in different application areas, including food packaging and medical devices. Polypropylenes feature chemical and thermal resistance as well as mechanical strength and are therefore used in different applications such as for moulding, in films, wires and cables or pipes. Furthermore, polypropylenes can be blown into foams. Suitable polypropylene materials for soft and flexible applications are for example heterophasic propylene polymer compositions. In general such compositions have a matrix phase (A) and a rubber phase (B) dispersed within the matrix phase. A disadvantage of these polypropylene materials is that they do not have sufficient mechanical properties for various special applications.

Such a heterophasic propylene polymer composition is described in EP1354901 wherein the composition comprises 70 to 95 wt% of a matrix phase comprising a propylene homopolymer and/or a propylene copolymer with at least 80 wt% of propylene and up to 20 wt% of ethylene and/or a C4-C10 a-olefin, and 5 to 30 wt% of a disperse phase comprising an ethylene rubber copolymer with from 20 to 70 wt% of ethylene and 80 to 30 wt% of propylene and/or a C4-C10 a-olefin, the ethylene rubber copolymer being distributed within the polymer composition in the form of particles, which propylene polymer composition has an MFR of> 100g/10min (230 °C/2.16 kg). The heterophasic propylene polymer composition is characterised by an improved processability as well as an improved balance of mechanical parameters. There is also a process provided for producing the novel heterophasic propylene polymer compositions. The features of the heterophasic propylene polymer composition described in EP1354901 are herewith enclosed by reference.

EP2319885 describes a random heterophasic propylene polymer compositions (also referred to as RAHECO) comprising a propylene random copolymer matrix phase (A), and an ethylene-propylene copolymer rubber phase (B) dispersed within the matrix phase having a good melt strength and low modulus and low cold xylene soluble fraction XCS. The heterophasic polypropylene resin has a MFR (2.16 kg, 230°C) of at least 1.0 g/10min, determined according to ISO 1133, comprising a propylene random copolymer matrix phase (A), and an ethylene-propylene copolymer rubber phase (B) dispersed within the matrix phase, wherein the heterophasic polypropylene resin has a fraction soluble in p-xylene at 25°C (XCS fraction) being present in the resin in an amount of 15 to 45 wt% whereby the XCS fraction has an ethylene content of 25 wt% or lower, and a fraction insoluble in p-xylene at 25°C (XCU fraction), said heterophasic polypropylene resin being characterised by a strain hardening factor (SHF) of 1. 7 to 4.0 when measured at a strain rate of 3.0 s·1 and a Hencky strain of 3.0.

WO2015117958 describes a special RAHECO for injection moulding with improved balance between optical and mechanical properties such as toughness (impact strength) and haze. WO2015117948 describes a special soft and transparent RAHECO for film with improved balance between softness, impact strength and optical properties such as haze.

RAHECO polypropylenes form a particularly interesting class of materials combining the benefits of random copolymer (optics) and heterophasic copolymer (mechanical properties). The properties depend on the comonomer content, type of comonomer as well as on the rubber design. The properties such as softness and transparency can be tailored in a very broad range. Therefore this type of materials are found in a wide range of applications such as films, moulding, modifiers and hot melt adhesives. The heterophasic propylene polymer compositions of the prior art have the disadvantage that the mechanical properties, in particular strength are insufficient for certain applications where typically flexible polyurethanes are used. The limited spectrum of mechanical properties limits the use of soft PP into commodity applications where other non-PP materials with HSE concerns are required. There is a need to broaden the range of mechanical properties and broaden the application areas of RAHECO PP for such specialty applications.

It is known that crosslinking of polyolefins can improve the chemical and thermal resistance and increase the mechanical strength, but also that it reduces the melt strength and crosslinking and also increases the stiffness. It is a difficult challenge to provide a good balance between on one hand a desired degree of crosslinking and on the other hand to maximally maintain the properties of the starting material. A known way to achieve a crosslinkable polyolefin is by providing the polyolefin with a hydrolysable silane functionality which forms crosslinks between the polyolefin chains on contact with water by hydrolisation and condensation. US4,413,066 describes that hydrolysable silane-groups can be introduced into polyethylene by copolymerisation of the olefin monomers and silane-group containing monomers. US3646155 describes a process wherein the silane functional polyolefin is prepared by reacting a polyolefin, which is polyethylene or a copolymer of ethylene with a minor proportion of propylene and/or butylene, with an unsaturated silane in presence of a radical initiator at a temperature above 140 °C.

The production of crosslinkable silane-grafted polypropylene is also known but presents a lot of difficulties. Because the grafting reaction takes place in the melt and the melting temperature of polypropylene is significant of polyethylene, the reactants in polypropylene grafting are exposed to such high temperatures that undesired side reactions occur. For example, WO2012036846 describes a process for forming a crosslinkable silane-grafted polypropylene composition. It is described that the problem is that because the reaction takes place at high temperatures in the melt the control of the grafting reaction is difficult and may result in unacceptable degradation of the polypropylene (visbreaking) and deterioration of the properties, in particular melt flow rate (hereinafter referred to as "MFR"). The process comprises contacting a polyolefin with a silane compound in the presence of a radical initiator (e.g. a peroxide) and a special multifunctional monomer to scavenge radicals. The multifunctional monomer is a di- or tri-acrylic monomer.

WO2000055225 A1 describes a general process for producing a silane functional polyolefin product which can be cross-linked by silane condensation and addresses the problems of uniformity in the grafting reaction. In the process a polyolefin (polyethylene or polypropylene), a vinylsilane grafting agent, a peroxide initiator and a cross-linking catalyst (e.g. dibutyltin dilaurate) and possible additives are fed into an extruder, extruded and cross-linked with water, in which process the degree of the grafting is determined using an on-line method, for example by a thermomechanical analyser, and based upon the result obtained, the amounts of the components to be fed into the extruder are continuously adjusting in order to obtain the desired grafting degree. The polyolefins are not described in detail. A disadvantage of the prior art method is that the method to control the grafting is unpractical and laborious and the grafting reaction still results in unacceptable degradation of the polymer and deterioration of the properties, in particular the melt flow rate.

WO2009056409 describes silane-functionalised crosslinkable polyolefin compositions for use in wires and cables. Here the problem is described of the undesirable crosslinking and gel formation occurring as side reaction to the grafting reaction and proposes a polyolefin composition comprising a blend of polymer component (i) bearing silane moieties, preferably a ethylene homopolymer or copolymer, and a polyolefin component (ii) which is a polymer of olefin having at least 3 carbon atoms. The polyolefin component (ii) can be homo- or copolymer polypropylene or heterophasic copolymers of PP. Said silane- crosslinkable polymer component (i) is a silane-grafted polymer component (i) obtainable by grafting hydrolysable silane compounds via radical reaction to said base polymer (A). A disadvantage of this crosslinkable material is that the silane-grafted polymer component (i) and polyolefin component (ii) are not miscible and a significant amount of the material is not crosslinked which may induce phase separation.

EP1834987 describes a heterophasic polypropylene composition comprising a propylene homo- or copolymer (A) as matrix phase and a crosslinked polyolefin (B) dispersed phase made by blending into matrix phase A a polyolefin B comprising hydrolysable silane-groups together with a silanol condensation catalyst and granulating into a water bath to cross-link polyolefin (B) to a degree of at least 30 % based on the total polyolefin (B). The crosslinked polyolefin (B) is preferably a polyethylene vinylsilane copolymer like Visico LE4481.

US 2009/0143531A1 describes a hydrolisable silane graft propylene α olefin copolymer comprising 2 components a) and b) wherein component a) is a propylene α-olefin copolymer component comprising propylene-derived units and from 5 to 35 wt %, of ethylene-derived units or a C4 to C10 α-olefin derived units, and having specified density, MWD, melting enthalpy and temperature and triad tacticity and components b) is a hydrolysable silane component. The graft copolymer is produced by reacting the hydrolysable vinyl silane component and a free-radical initiator with a propylene α-olefin copolymer directly or via intermediate maleic anhydride grafting followed by reaction of the maleic anhydride grafted copolymer with an amino-silane. Grafting of heterophasic propylene copolymer is not described but blends of the grafted propylene copolymer with heterophasic polypropylene products are described. Similarly EP1252233 also describes moisture crosslinked compositions of silane-modified ethylene based polyolefins blended with non-silane modified polypropylene homopolymers and/or copolymers. Such materials are used as heat-shrinkable coatings or insulating materials. WO98/23687 describes in examples 1-3 blends of 75 parts polypropylene, 25 parts vinylsilane grafted polyethylene and dibutyltinlaureate, which are extruded and crosslinked in a water bath and drawn to films.

So it appears that there is still a need for an improved process for the production of a crosslinkable polypropylene wherein a significant degree of grafting and homogeneous grafting is achieved while avoiding an unacceptable degree of premature crosslinking, gel formation and degradation (vis-breaking) leading to an unacceptable increase in melt flow rate (MFR) of the propylene polymer.

**Brief description of the invention**

According to the invention one or more of the above mentioned problems have been solved according to the invention by providing a process for the preparation of a crosslinkable propylene polymer composition comprising melt mixing and reacting, preferably in an extruder,

> a. a heterophasic propylene copolymer composition A,
> b. at least one crosslinkable grafting component B represented by the formula (I)

$$R^1SiR^2_qY_{3-q} \qquad (I)$$

> wherein $R^1$ is an ethylenically unsaturated hydrocarbyl, hydrocarbyloxy or (meth)acryloxy hydrocarbyl group, each $R^2$ is independently an aliphatic saturated hydrocarbyl group, Y which may be the same or different, is a hydrolysable organic group and q is 0, 1 or 2.
> c. a radical initiator C,
> d. optionally a polyunsaturated component D,
> and further adding
> e. optionally an anti-oxidant E,
> f. optionally a condensation catalyst F.

In another aspect, the invention relates to a crosslinkable propylene polymer obtainable by the process according to the invention and to a crosslinked propylene polymer obtained by contacting the crosslinkable propylene polymer according to the invention with moisture. The invention also relates to the use of the cross-linkable propylene polymer or the cross-linked propylene polymer according to the invention for the manufacture of hot-melt adhesive, film, foam, coatings or shaped articles. The cross-linked propylene polymer products are useful in food packaging, textile packaging and technical and protection films.

It has been found that in the process of the invention the grafting density can be easily tailored without an acceptable sacrifice of the polymer properties, in particular the melt flow rate. This opens a range of application possibilities.

## Brief description of the figures

> Figure 1 presents the degree of vinyltrimethoxysilane (VTMS) grafting as a function of the amount of VTMS in the feed.
> Figure 2 presents an extruder for carrying out the process of the invention to produce cross-linkable polypropylene hetero phasic copolymer by reactive extrusion.

## Detailed description of the invention

Heterophasic copolymer compositions A are suitable for use in the process according to the invention are known and described in the above mentioned prior art and the description of the features of the heterophasic propylene polymer composition described therein are herewith enclosed by reference.

In a particularly preferred embodiment, the heterophasic copolymer composition A comprises i) a random propylene copolymer (R-PP) and ii) an elastomer propylene copolymer (E-PP), said copolymers R-PP and E-PP have, or are able to form, a heterophasic structure having a matrix phase of copolymer R-PP and a dispersed phase of copolymer E-PP. The random heterophasic propylene copolymer composition A preferably comprises (a) 50 - 90 wt.%, preferably 55 - 90 wt.% of a copolymer R-PP and (b) 50 - 10 wt.% , preferably 45 - 10 wt.% of copolymer E-PP.

Typically, the copolymer R-PP comprises 12 wt.% or less, preferably 10 or 8 wt% or less of at least one comonomer selected from ethylene and a $C_4$-$C_{12}$ alpha-olefin, and wherein the elastomer copolymer E-PP comprises 10-50 wt.% of at least one comonomer selected from ethylene and a $C_4$-$C_{12}$ alpha-olefin.

Although the properties can vary within wide ranges, the copolymer R-PP preferably has a melt flow rate (MFR2) of 0.1-100 g/10min as measured according to ISO 1133 at a temperature of 230 °C and under a load of 2.16 kg and preferably a melting temperature in the range of 135 to 155 °C as measured according to ISO 11357-3.

The copolymer E-PP preferably has a Xylene Cold Soluble fraction (XCS) of 10 - 50 wt% as measured at 25 °C according to ISO 16152; fifth edition; 2005-07-01 and preferably has an intrinsic viscosity IV of 1-5 dl/g measured according to ISO 1628/1, in decalin at 135 °C. It is preferred that the heterophasic copolymer composition A is substantially the only (co-)polymer composition used in the process, so there are no homo- or copolymer present or used in the grafting process other than the constituents of the, preferably a random-, heterophasic copolymer composition as described in the various embodiments above.

The at least one crosslinkable grafting component B is represented by the formula (I)

$$R^1SiR^2_qY_{3-q} \qquad (I)$$

wherein $R^1$ is an ethylenically unsaturated hydrocarbyl, hydrocarbyloxy or (meth)acryloxy hydrocarbyl group, each $R^2$ is independently an aliphatic saturated hydrocarbyl group, Y which may be the same or different, is a hydrolysable organic group and q is 0, 1 or 2. Preferably, component B is an unsaturated silane compound of formula II :

$$R^1Si(OA)_3 \qquad (II)$$

wherein each A is independently a hydrocarbyl group having 1-8 carbon atoms, suitably 1-4 carbon atoms. Hherein $R^1$ preferably is vinyl, allyl, isopropenyl, butenyl, cyclohexenyl or gamma-(meth)acryloxy propyl; Y preferably is methoxy, ethoxy, formyloxy, acetoxy, propionyloxy or an alkyl- or arylamino group; and $R^2$, if present, is a methyl, ethyl, propyl, decyl or phenyl group, preferably selected from the group comprising gamma-(meth)acryl-oxypropyl trimethoxysilane, gamma-(meth)-acryloxypropyl triethoxysilane, and vinyl triacetoxysilane or combinations of two or more thereof or more preferably vinyl trimethoxysilane, vinyl bismethoxyethoxysilane, vinyl triethoxysilane, most preferably vinyl trimethoxysilane or vinyl triethoxysilane.

To achieve the grafting of the cross-linkable grafting component B a radical initiator C is necessary, which is preferably a thermally decomposing free radical- forming agents. Component C is typically a peroxy radical initiator and preferably present at a concentration of at least 50 ppm, typically between 50 and 1000 ppm relative to the total amount of A and B. Preferably the thermally decomposing free radical- forming agents selected from the group consisting of acyl peroxide, alkyl peroxide, hydroperoxide, perester and peroxycarbonate.

Suitable examples of radical initiator C are described in WO2014016205 and are incorporated herein by reference. The radical initiator C is preferably chosen from the group comprising Dibenzoyl peroxide, tert-Butyl peroxy-2-ethylhexanoate, tert-Amyl peroxy-2-ethylhexanoate, tert-Butyl peroxydiethylacetate, 1,4-Di(tert-butylperoxycarbo)cyclohexane, tert-Butyl peroxyisobutyrate, 1, 1-Di(tert-butylperoxy)-3,3,5-trimethyl-cyclohexane, Methyl isobutyl ketone peroxide, 2,2-Di(4,4-di(tert-butylperoxy)cyclohexyl)propane, 1, 1-Di(tertbutylperoxy) cyclohexane, tert-Butyl peroxy-3,5,5-trimethylhexanoate, tert-Amylperoxy 2-ethylhexyl carbonate, 2,2-Di (tert-butylperoxy)butane, tert-butylperoxy isopropyl carbonate, tert-Butylperoxy 2-ethylhexyl carbonate, tert-Butyl peroxyacetate, tert-butyl peroxybenzoate, Di-tert-amyl peroxide and mixtures of these organic peroxides. Most preferably, the initiator C is tert-butylperoxy isopropyl carbonate.

In a preferred process according to the invention the crosslinkable grafting component B and the radical initiator C are continuously dosed into an extruder, preferably as a mixture of components B and C, and heterophasic propylene copolymer composition A. The degree of grafting can be controlled by choosing an appropriate dosing regime for the radical initiator C and the cross-linkable grafting component B.

The process for the preparation of a crosslinkable polyolefin composition is preferably carried out in an extruder, preferably a twin-screw extruder and preferably comprising two high intensity mixing segments. The polymer is heated to a temperature between 180 and 230 °C, more preferably between 185 and 225 °C. In a specific embodiment, the extruder is a co-rotating twin-screw extruder having at least six zones, wherein the temperature in a first zone is higher than 90 °C, wherein the temperature in the second zone is higher than 150 °C, wherein the temperature in the third zone is higher than 180 °C, wherein the temperature in the sixth and any subsequent zone is higher than 200 °C, wherein the temperature in any zone is lower than 230 °C. The residence time of the propylene polymer composition in the extruder is preferably between 30 - 90 sec. It is believed that the grafting occurs on all constituent components of the hetero phasic propylene copolymer composition A rather uniformly.

In view of achieving a sufficiently high degree of grafting on one hand and an acceptable low increase of the melt flow rate, in the process the radical initiator C is preferably added in an amount between 0.01 and 1 wt% and preferably less than 1 wt.%, more preferably less than 0.1 wt.%, even more preferably less than 0.05 wt.% relative to the total weight of components a) to f). The crosslinkable grafting component B is preferably added in an amount between 0.1 and 10 wt% relative to the total weight of components a) to f).

A good balance of degree of grafting and low MFR increase is obtained when the relative amount of radical initiator C relative to the total amount of B and C is preferably less than 25 wt%, more preferably less than 20, 15, 10 or even less than 5 wt% and preferably the amount of component B added is at least 0.5 more preferably at least 1.0 or even 1.5 wt% and preferably typically less than 5.0 wt% relative to the total weight of the composition.

Optionally, in this process a also polyunsaturated component D can be added to facilitate the grafting reaction. Polyunsaturated means the presence of two or more non-aromatic double bonds which can be polymerised with the aid of free radicals. Suitable examples are divinyl compounds, such as divinylaniline, m-divinylbenzene, p-divinylbenzene, divinylpentane and divinylpropane; allyl compounds, such as allyl acrylate, allyl methacrylate, allyl methyl maleate and allyl vinyl ether; dienes, such as 1,3-butadiene, chloroprene, cyclohexadiene, cyclopentadiene, 2,3-dimethylbutadiene, heptadiene, hexadiene, isoprene and 1,4-pentadiene and mixtures of these unsaturated monomers. The polyunsaturated component D is preferably a butadiene or a polybutadiene oligomer. Preferably, the polyunsaturated component D is present in an amount between 0.1 and 10 wt%, preferably between 0.1 and 5, more preferably between 0.2 and 2 wt% relative to the total weight of A and B and components C and D. The presence of component D can have beneficial effects on the mechanical properties of the crosslinkable composition.

It is preferred that, apart from the polyunsaturated component D and component B, substantially no other unsaturated components are used in the process. In particular, no multifunctional acrylic monomers such as a di- or tri-acrylic monomer are necessary to achieve a good degree of grafting without unacceptable increase in MFR.

The heterophasic propylene copolymer may typically contain up to 5.0 wt.-% additives, like nucleating agents, antioxidants, processing aids, slip agents and antiblocking agents. Preferably the additive content (without $\alpha$-nucleating agents) is below 3.0 wt.-%, like below 1.0 wt.-%.

In one embodiment of the present invention, the heterophasic propylene copolymer (RAHECO) may comprise a nucleating agent, more preferably a $\alpha$-nucleating agent. Even more preferred the present invention is free of $\beta$-nucleating agents. The $\alpha$-nucleating agent is preferably selected from the group consisting of

(i) salts of monocarboxylic acids and polycarboxylic acids, e.g. sodium benzoate or aluminum tert-butylbenzoate, and

(ii) dibenzylidenesorbitol (e.g. 1,3:2,4 dibenzylidenesorbitol) and C1-C8-alkyl-substituted dibenzylidenesorbitol derivatives, such as methyldibenzylidenesorbitol, ethyldibenzylidenesorbitol or dimethyldibenzylidenesorbitol (e.g. 1,3:2,4 di(methylbenzylidene) sorbitol), or substituted nonitol-derivatives, such as 1,2,3,-trideoxy-4,6:5,7-bis-O-[(4-propylphenyl)methylene]-nonitol, and

(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and

(iv) vinylcycloalkane polymer and vinylalkane polymer, and

(v) mixtures thereof.

Such additives are generally commercially available and are described, for example, in "Plastic Additives Handbook", 5th edition, 2001 of Hans Zweifel.

Preferably in the process also an anti-oxidant component E is used. Suitable antioxidant component E are described in WO 2013102938, here with enclosed by reference, for example hindered phenolic-type antioxidants selected from the group Pentaerythritol Tetrakis(3-(3,5-di-tert- butyl-4-hydroxyphenyl)propionate); IRGANOX 1010 FF; IRGANOX 1010 DD; 1,3,5-tris(3,5- di-tert-butyl-4-hydroxybenzyl)-1,3,5-triazine-2,4,6(1H,3H,5H)-trione.and 1,3,5Trimethyl2,4,6tris(3,5di-tert-butyl-4hydroxybenzyl)benzene 330. in the range of 200 - 800 ppm by weight, preferably 400 to 800 ppm.

A suitable secondary oxidant may be organo phosphites or organo phosphonite, selected from Tris (2,4-di-tert-butylphenyl)phosphate,Bis (2,4-di-t-butylphenyl) Pentaerythritol Diphosphite, ULTRANOX 627A, 2,4,6tri-t- butylphenyl-2-butyl-2-ethyl- 1, 3-propanediolphosphite , Bis (2 ,4-dicumylphenyl) pentaerythritol diphosphite, tris[2-[[2,4,8,10-tetra-tert- butyldibenzo[d,f][1 ,3,2]dioxaphosphepin-6-yl]oxy]ethyl]amine,[4-[4-bis(2,4-ditert- butylphenoxy)-phosphanyl-phenyl]phenyl]-bis(2,4-ditert-butylphenoxy)phosphane in the range of 400 -1400 ppm by weight, preferably 500 to 1200 ppm by wt.

The crosslinkable polyolefin composition may further contain various additives, such as miscible thermoplastics, further stabilizers, lubricants, fillers, colouring agents and foaming agents. Suitable additives are also described in the above-mentioned prior art relating to heterophasic propylene polymer compositions and are herewith enclosed by reference. A suitable additive package for example comprises hindered phenol, organo phosphite and acid scavenger. The additives can be added to the polypropylene powder by premixing and added to the composition during compounding step.

The cross-linking is governed by the hydrolysis of the silane groups of cross-linkable grafting component B that has been grafted onto the heterophasic propylene copolymer composition A. This crosslinking reaction is preferably assisted by a silane condensation catalyst F and therefore it is preferred that in the process a silane condensation catalyst F is added to the cross-linkable composition. The catalyst F can be selected from the group of Lewis acids, inorganic acids, organic acids, organic bases and organometallic compounds. Organic acids can be selected from, but are not limited to, citric acid, sulphonic acid and alkanoic acids. Organometallic compounds can be selected from, but are not limited to, organic titanates and metal complexes of carboxylates, wherein the metal can be selected from, lead, cobalt, iron, nickel, zinc and tin. In the case of organometallic compounds, typically organometallic complexes, also precursors thereof can be included as a silane condensation catalyst. The tin based and sulphonic based catalyst allow for ambient curing; so typically curing at 23°C. The sulphonic based catalyst are preferred from HSE point of view compared to tin based catalysts. If added to the crosslinkable polyolefin composition the silanol condensation catalyst is present in an amount of 0.0001 to 6 wt%, more preferably of 0.001 to 2 wt%, and most preferably of 0.05 to 1 wt%.

It is preferred that the process comprises a separate compounding step after the grafting reaction step wherein the silane condensation catalyst F is added during said compounding step. This prevents premature cross-linking of the cross-linkable grafting component B.

The invention also relates to a crosslinkable propylene polymer obtainable by the process according to the invention as described above; in particular to a crosslinkable propylene polymer comprising

a. a heterophasic propylene copolymer composition A, preferably a RAHECO,

b. between 0.1 and 5 wt% component B grafted on said composition A, wherein component B is represented by the formula (I) as described above

$$R^1SiR^2_qY_{3-q} \qquad (I)$$

and having

c. a MFR between 5 and 100 g/10 min,

d. a XCS between 10 and 40 wt%

e. a rubber Tg beween -70 and -20 °C and matrix Tg between -20 and 25 °C

f. a lowest melting temperature of at least 135 °C

g. a gel content below 1 wt%, preferably below 0.5 more preferably below 0.1 wt%

The crosslinkable propylene polymer of the invention preferably has a melt flow rate MFR less than 8, preferably 6 or more preferably less than 4 times the MFR of the unmodified random heterophasic propylene copolymer A and preferably an amount of grafted crosslinkable groups B of at least 0.05 wt%, more preferably at least 0.1, even more 0.2 or even 0.4 wt% relative to the weight of the crosslinkable polypropylene polymer. Further, it is preferred that the crosslinkable propylene polymer has a xylene cold soluble fraction XCS less than 30, preferably less than 25, more preferably less than 20 wt% and preferably the melt flow rate (MFR) is lower than 50 g/10 min, the XCS is less than 25 wt.% and the gel content is less than 0.1 wt%.

The invention also relates to a crosslinked propylene polymer obtained by contacting the crosslinkable propylene polymer according to the invention with moisture. This can be by contacting with steam, immersion in water or even exposure to humidity in air, but preferably at a temperature higher than 20 °C.

Further, the invention relates to the use of the cross-linkable propylene polymer or of the cross-linked propylene polymer of the invention for the manufacture of hot-melt adhesive, film, foam, coatings or shaped article. The cross-linkable polypropylene can be used directly as a sealant, foam or adhesive as is known in the art, for example by applying the cross-linkable polypropylene, for example from a syringe, on a substrate surface and exposing to moisture.

The invention also relates to a process for the manufacture of a crosslinked propylene polymer shaped products comprising i) providing a crosslinkable polyolefin composition according to claims 18 to 22, ii) forming the crosslinkable polyolefin composition into a shaped product and iii) exposing the shaped product to moisture. Several parameters will influence the properties of the crosslinked products. Moisture can be provided by either ambient air conditions or in a water bath. If present, the silane condensation catalyst F catalyses the condensation reaction of the hydrolysable silane groups on polymer B. Because polymer B is grafted onto the one or more polymers A the condensation of the silane functional groups provide a crosslinked composition.

The invention further relates to cross-linked heterophasic polypropylene shaped products obtainable by the above method. The crosslinked product can be a foam, a sealant or an adhesive layer or a shaped article, and preferably is a crosslinked expanded foam layer or a crosslinked heterophasic polypropylene shaped product. The crosslinked product according to the invention is very suitable for use in food packaging, textile packaging, technical films, protection films or medical devices.

The following is a description of certain embodiments of the invention, given by way of example on ly.

**Definitions and Measurement Methods**

a. <u>Melt Flow Rate</u>

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR also provides a measure to assess visbreaking of a polymer during production processes, for example during grafting reactions. The MFR2 of polypropylene is determined at a temperature of 230 °C and a load of 2.16 kg, the MFR5 of polyethylene is measured at a temperature of 190 °C and a load of 5 kg and the MFR2 of polyethylene at a temperature of 190 °C and a load of 2.16 kg.

b. <u>Decaline insoluble fraction</u>

The content of decaline hot insoluble components is determined by extracting 1 g of finely cut polymer sample with 500 ml decaline in a Soxleth extractor for 48 hours at the boiling temperature of the solvent. The remaining solid amount is dried at 90 °C and weighed to determine the amount of insoluble components. The cross-linking degree is determined as the mathematical fraction of the decaline hot insoluble fraction and the total content of the heterophasic polypropylene composition.

c. XCS Xylene cold soluble fraction

The xylene cold soluble (XCS) fraction was measured according to ISO 16152 at 25 °C. The part which remains insoluble is the xylene cold insoluble (XCI) fraction.

d. Storage modules (G') and Glass transition temperature (Tg)

The storage modulus G' and the glass transition temperature Tg were measured by Dynamic Mechanical Thermal Analysis (hereinafter referred to as "DMTA") analysis. The DMTA evaluation and the storage modulus G' measurements were carried out in torsion mode on compression moulded samples at temperature between -130 °C and +150 °C using a heating rate of 2 °C/min and a frequency of 1 Hz, according to ISO 6721-07. The measurements were carried out using an Anton Paar MCR 301 equipment. The compressed molded samples have the following dimensions: 40x10x1 mm and are prepared in accordance to ISO 1872-2:2007. The storage modulus G'23 was measured at 23 °C.

e. Tensile properties

Tensile properties were assayed according to two different methods. For data presented in Table 1, the elongation at break (EAB) was measured at 23 °C according to ISO 527-1:2012/ISO 527-2:2012 using an extensometer (Method B) on injection moulded specimens, type 1B, produced according to ISO 1873-2 with 4 mm sample thickness. The test speed was 50 mm/min, except for the tensile modulus (E) measurement which was carried out at a test speed of 1 mm/min. Tensile properties were measured according to ISO 527-2/5A/250; the Crosshead (grips holding the specimen) movement speed was set to 250 mm/min. Test specimen were produced as described in EN ISO 1872-2, specimen type 5A according to ISO 527-2 were used. The plaque thickness used was 1.8 mm.

f. Intrinsic viscosity (IV)

The intrinsic viscosity (IV) is measured according to ISO 1628/1, in decalin at 135 °C. The intrinsic viscosity (IV) value increases with the molecular weight of a polymer.

g. Quantification of VTMS in RAHECO-g-VTMS

Quantitative nuclear-magnetic resonance (NMR) spectroscopy was used to quantify the VTMS content and derived properties of the polymers.
Quantitative $^1$H NMR spectra recorded in the molten-state using a Bruker Advance III 500 NMR spectrometer operating at 500.13 MHz. All spectra were recorded using a $^{13}$C optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09}. Standard single-pulse excitation was employed applying short recycle delay of 2s. A total of 128 transients were acquired per spectrum. This setup was chosen due its high sensitivity towards low comonomer contents.
Quantitative $^1$H NMR spectra were processed, integrated and quantitative properties determined using custom spectral analysis automation programs. All chemical shifts are internally referenced to the poly propylene methyl signal at 0.93 ppm.
The vinyltrimethylsiloxane grafted was quantified using the integral of the signal at 3.52 ppm assigned to the 1VTMS sites, accounting for the number of reporting nuclei per grafted monomer:

$$VTMS = I_{1VTMS} / 9$$

The ethylene-propylene content was quantified using the integral of the bulk aliphatic (bulk) signal between 0.00 - 2.50 ppm. This integral must be compensated by subtracting 4VTMS (2 methylene groups) and add 1VTMS (branch missing 1 proton) in total subtracting 3VTMS.

$$bulk_{comp} = bulk - 3*VTMS$$

To quantify the VTMS content accurately it is essential to introduce the total ethylene content (mol%C2) which was measured by quantitative $^{13}$C NMR spectroscopy as described.

Relative amount of protons resulting from incorporated ethylene was calculated as:

$$rH_{ethylene} = [(mol\%C2 * 4) + ((100 - mol\%C2) * 6)] / 100$$

The total amount of protons resulting from the ethylene with respect to the relative amount of ethylene protons and the total amounts of bulk protons was calculated as:

$$H_{ethylene} = (mol\%C2 * 4 /100) * bulk_{comp} / rH_{ethylene}$$

Total amount of protons resulting from poly propylene were calculated as:

$$H_{propylene} = bulk_{comp} - H_{ethylene}$$

The total amount of grafted comonomer in mol% ($M_{VTMS}$) was calculated by dividing the molfraction of VTMS by the sum of the molfractions of VTMS, ethylene (amount of protons divided by 4 four to get the moles of ethylene) and propylene (amount of protons divided by 6 to get the moles of propylene):

$$M_{VTMS} = (VTMS * 100) / [VTMS + (H_{etylene}/4) + (H_{propylene}/6)]$$

To get the wt% VTMS ($W_{VTMS}$) from the mol% ($M_{VTMS}$) result it is needed to calculate the approximate average molecular mass ($Mn_{C2C3}$) from the concentrations of both ethylene and propylene as:

$$Mn_{C2C3} = [(mol\%C2 * 28) + ((100 - mol\%C2) * 42)] / 100$$

$W_{VTMS} = (M_{VTMS} * 148 * 100) / [(M_{VTMS} * 148) + ((100 - M_{VTMS}) * Mn_{C2C3})]$

Both graft contents of VTMS per 1000 backbone carbons (g-VTMS/1000Cbb) and per 1000 total carbons (g-VTMS/1000Cttotal) can be calculated by dividing the number of reported VTMS by number of carbons derived from the amount of derived ethylene protons divide by 2 and propylene protons divided by 3 respectively 2:

$$g\text{-}VTMS/1000Cbb = (VTMS * 1000) / [(H_{propylene}/3) + (H_{etylene}/2)]$$

$$g\text{-}VTMS/1000Ctotal = (VTMS * 1000) / [(H_{propylene}/2) + (H_{etylene}/2)]$$

klimke06
Klimke, K., Parkinson, M., Piel, C., Kaminsky, W., Spiess, H.W., Wilhelm, M., Macromol. Chem. Phys. 2006;207:382.
parkinson07
Parkinson, M., Klimke, K., Spiess, H.W., Wilhelm, M., Macromol. Chem. Phys. 2007;208:2128.
castignolles09
Castignolles, P., Graf, R., Parkinson, M., Wilhelm, M., Gaborieau, M., Polymer 50 (2009) 2373.

h. <u>Quantification of ethylene content in RAHECO-PP</u>

Quantitative nuclear-magnetic resonance (NMR) spectroscopy was used to quantify the comonomer content and comonomer sequence distribution of the polymers.

Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10

mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate (Cr(acac)$_3$) resulting in a 65 mM solution of relaxation agent in solvent {singh09}. To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme{zhou07,busico07}. A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed {cheng84}.

The comonomer fraction was quantified using the method of Wang et. al. {wang00} through integration of multiple signals across the whole spectral region in the $^{13}C\{^1H\}$ spectra. This method was chosen for its robust nature and ability to account for the presence of regio-defects when needed.

busico01
Busico, V., Cipullo, R., Prog. Polym. Sci. 26 (2001) 443.
busico97
Busico, V., Cipullo, R., Monaco, G., Vacatello, M., Segre, A.L., Macromoleucles 30 (1997) 6251.
zhou07
Zhou, Z., Kuemmerle, R., Qiu, X., Redwine, D., Cong, R., Taha, A., Baugh, D. Winniford, B., J. Mag. Reson. 187 (2007) 225
busico07
Busico, V., Carbonniere, P., Cipullo, R., Pellecchia, R., Severn, J., Talarico, G., Macromol. Rapid Commun. 2007,28,1128
resconi00
Resconi, L., Cavallo, L., Fait, A., Piemontesi, F., Chem. Rev. 2000, 100, 1253.
wang00
Wang, W-J., Zhu, S., Macromolecules 33 (2000), 1157.
cheng84
Cheng, H. N., Macromolecules 17 (1984), 1950.
singh09
Singh, G., Kothari, A., Gupta, V., Polymer Testing 28 5 (2009), 475.
randall89
Randall, J. Macromol. Sci., Rev. Macromol. Chem. Phys. 1989, C29, 201.

## Examples

The following is a description of certain embodiments of the invention, given by way of example on ly.

### INVENTIVE EXAMPLES IE1 to IE3

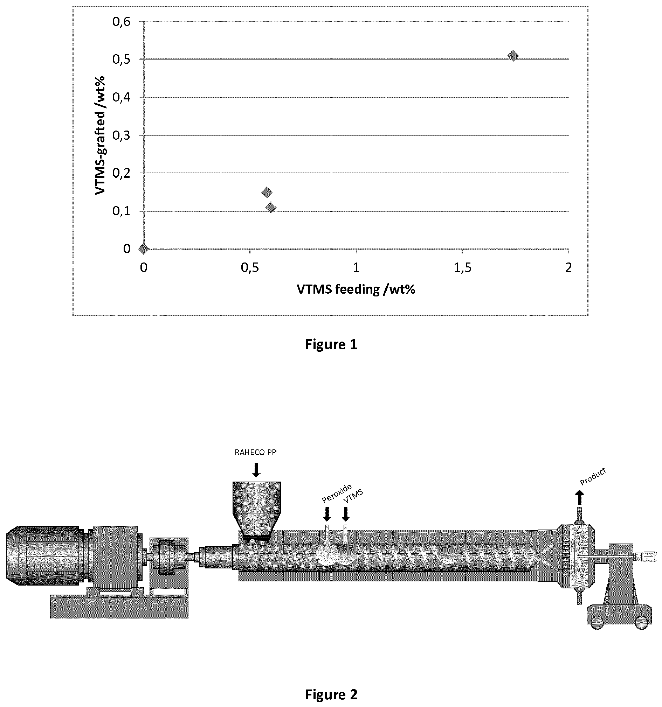

Figure 2 schematically presents the process to produce a crosslinkable heterophasic propylene copolymer composition by reactive extrusion. The heterophasic propylene copolymer composition used was Borsoft SD233CF; a very soft random heterophasic copolymer available from Borealis (hereafter referred to as RAHECO PP) having an MFR2 of 7 g/10min, a flexural modulus of 500 MPa, and a melting temperature of 140°C.

The VTMS grafting was performed with a 30 mm co-rotating twin screw extruder with L/D of 38. The RAHECO PP polymer powder was pre-mixed with solid anti-oxidant (AO) one-pack (0.1 wt-% of the additives was premixed into the powder). The total powder feed rate was 8 kg/h. The AO one-pack was also fed by a side feeder to barrel 8. The AO one-pack composition 22.2 wt-% of hindered phenol, 44.4 wt-% of organo phosphite and 33.4 wt-% of acid scavenger.. A solution of Peroxide and VTMS was produced in different ratios for each example and pumped to barrel 2 via a feed nozzle. The peroxide was Trigonox BPIC-C75 with peroxide concentration of 75 wt-% and VTMS was pure at >99 wt-%.

RAHECO PP base resin pellets are fed to the extruder hopper. Peroxide and VTMS are fed to the solid PP or molten PP using a liquid feed nozzle. The residence time of polymer in the extruder was approximately 60 seconds. The extruded polymer strand was cooled in a water bath and cut with a strand cutter. Due to high reactivity of vinyl groups there is very little unreacted VTMS monomers in the end product. VTMS is non-toxic which makes it feasible comonomer even in the applications with food contact. There was no need of post-treatment for the end product. The extrusion conditions are summarised in Table 1.

**Comparative Experiment 1: CE1**

The same process as described above for IE1 to IE3 was used except that no VTMS (silane grafting components B) or Trigonox BPIC-C75 (radical initiator C) was used.

**Table 1:** extrusion conditions

| Sample | CE1 | IE1 | IE2 | IE3 |
|---|---|---|---|---|
| *Info / matrix position* | Stabilized powder | 0.025/0.6 | 0.1/0.6 | 0.025/1.8 |
| *Base resin* | SD233CF | SD233CF | SD233CF | SD233CF |
| *Peroxide* | | BPIC-C75 | BPIC-C75 | BPIC-C75 |
| RPM screw | 200 | 200 | 200 | 200 |
| T melt °C | 225 | 224 | 223 | 224 |
| P melt bar | 10 | 8 | 6 | 7,5 |
| Torque % (final) | 62-68 | 63 | 58 | 61 |
| **Feeds** | | | | |
| Feed barrel point | | Barrel 2 | Barrel 2 | Barrel 2 |
| Polymer feed rate, kg/h | 8 | 8 | 8 | 8 |
| AO Additive mix feed rate g/h | 24 | 24 | 24 | 24 |
| BPIC-C75 wt-% in solution | | 5.26 | 18.2 | 1.82 |
| VTMS wt-% in solution | | 94.74 | 81.8 | 98.182 |
| Solution feed rate, g/min | | 0.825 | 0.98 | 2.4 |
| **Temperatures °C** | | | | |
| Zone 1 | 102 | 102 | 103 | 102 |
| Zone 2 | 158 | 159 | 158 | 158 |
| Zone 3 | 185 | 184 | 185 | 184 |
| Zone 4 | 195 | 195 | 195 | 195 |
| Zone 5 | 196 | 199 | 197 | 200 |
| Zone 6 | 213 | 214 | 218 | 218 |
| Zone 7 | 216 | 217 | 216 | 216 |

The resulting cross-linkable propylene compositions have different grafting degrees as a result of the different ratios of PP, VTMS monomer and radical initiator (peroxide) in Examples IE1 to IE3. The amount of VTMS grafted to the RAHECO-PP was determined by the method described above. Figure 2 shows the results of the amount of VTMS grafted as a function of the amount of VTMS in the feed. As can be seen, the grafting density can be easily tailored. Table 2 summarises the feed parameters.

**Table 2.** feed conditions

| Sample ID | AO feed wt-% in polymer | | BPIC-C75 | VTMS | Solution feed | POX | VTMS |
|---|---|---|---|---|---|---|---|
| | Pre-mixed | to Barrel 8 | wt-% in solution | | g/min | wt-% in polymer | |
| **CE1** | 0.1 wt-% | 0.3 wt-% | N/A | N/A | N/A | N/A | N/A |
| **IE1** | 0.1 wt-% | 0.3 wt-% | 5.26 | 94.74 | 0.825 | 0.024 | 0.58 |
| **IE2** | 0.1 wt-% | 0.3 wt-% | 18.2 | 81.8 | 0.98 | 0.100 | 0.60 |
| **IE3** | 0.1 wt-% | 0.3 wt-% | 1.82 | 98.18 | 2.4 | 0.024 | 1.74 |

The obtained crosslinkable propylene compositions were further characterised using the methods as described above by measuring the amount of VTMS grafted (wt%), melt flow rate (MFR 2.16 in g/10min), the melting temperature, the xylene cold soluble fraction (XCS in wt%), the glass transition temperatures of the dispersed rubber phase and the matrix of the cross-linkable RAHECO PP, the storage modulus (G' in Mpa), the melting - and crystallization temperatures (Tm and Tc in °C) and enthalpies (Hm in J/g), the gel content (GC in wt%), the tensile modulus (TM in Mpa) and the elongation at break (EAB the in %). The results are summarised in Table 3.

**Table 3.** characterisation of the obtained cross-linkable RAHECO PP.

| Lot No. | BPIC C75 feed | VTMS feed | VTMS grafted | MFR | XCS | Tg-rubber | Tg- matrix | G' |
|---------|---------------|-----------|--------------|-----|-----|-----------|------------|-----|
| CE1 | 0 | 0 | 0 | 11 | 16.85 | -50 | -5 | 379 |
| IE1 | 0.024 | 0.58 | 0.15 | 18 | 17.13 | -51 | -6 | 392 |
| IE2 | 0.1 | 0.6 | 0.11 | 42 | 17.35 | -51 | -5 | 379 |
| IE3 | 0.024 | 1.74 | 0.51 | 24 | 17.01 | -52 | -7 | 358 |
| | | | | | | | | |
| | Tc | Tm1 | Tm2 | Hm1 | Hm2 | GC | TM | EAB |
| CE1 | 99 | 141 | | 67 | | 0.02 | 684 | 576 |
| IE1 | 98 | 141 | 150 | 65 | 4 | 0.01 | 672 | 472 |
| IE2 | 98 | 141 | 150 | 56 | 12 | 0.04 | 653 | 640 |
| IE3 | 98 | 141 | 147 | 56 | 11 | 0.01 | 619 | 465 |

Thus, the invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention.

**Claims**

1. A process for the preparation of a crosslinkable propylene polymer composition comprising melt mixing and reacting, preferably in an extruder,

   a. a heterophasic propylene copolymer composition A,
   b. at least one crosslinkable grafting component B represented by the formula (I)

   $$R^1SiR^2_qY_{3-q} \qquad (I)$$

   wherein $R^1$ is an ethylenically unsaturated hydrocarbyl, hydrocarbyloxy or (meth)acryloxy hydrocarbyl group, each $R^2$ is independently an aliphatic saturated hydrocarbyl group, Y which may be the same or different, is a hydrolysable organic group and q is 0, 1 or 2,
   c. a radical initiator C,
   d. optionally a polyunsaturated component D,
   and further adding
   e. optionally an anti-oxidant E,
   f. optionally a condensation catalyst F,

2. The process of claim 1, wherein the a heterophasic propylene copolymer composition A comprises

   i. a random propylene copolymer (R-PP) and
   ii. an elastomer propylene copolymer (E-PP),

   said copolymers R-PP and E-PP have, or are able to form, a heterophasic structure having a matrix phase of copolymer R-PP and a dispersed phase of copolymer E-PP and wherein preferably the random heterophasic propylene copolymer composition A comprises (a) 50 - 90 wt.%, preferably 55 - 90 wt.% of a copolymer R-PP and (b) 50 - 10 wt.% , preferably 45 - 10 wt.% of copolymer E-PP.

3. The process according to claims 1 or 2 wherein component B is an unsaturated silane compound of formula II

$$R^1Si(OA)_3 \qquad (II)$$

wherein each A is independently a hydrocarbyl group having 1-8 carbon atoms, suitably 1-4 carbon atoms, wherein preferably $R^1$ is vinyl, allyl, isopropenyl, butenyl, cyclohexenyl or gamma-(meth)acryloxy propyl; Y preferably is methoxy, ethoxy, formyloxy, acetoxy, propionyloxy or an alkyl- or arylamino group; and $R^2$, if present, is a methyl, ethyl, propyl, decyl or phenyl group, preferably selected from the group comprising gamma-(meth)acryl-oxypropyl trimethoxysilane, gamma-(meth)-acryloxypropyl triethoxysilane, and vinyl triacetoxysilane or combinations of two or more thereof or more preferably vinyl trimethoxysilane, vinyl bismethoxyethoxysilane, vinyl triethoxysilane, most preferably vinyl trimethoxysilane or vinyl trimethoxysilane and is preferably added in an amount between 0.1 and 10 wt% relative to the total weight of components a) to f).

4. The process according to claims 1 - 3, wherein the radical initiator C is a thermally decomposing free radical- forming agents, preferably the thermally decomposing free radical- forming agents selected from the group consisting of acyl peroxide, alkyl peroxide, hydroperoxide, perester and peroxycarbonate and wherein preferably radical initiator C is added in an amount between 0.01 and 1 wt% and preferably less than 1 wt.%, more preferably less than 0.1 wt.%, even more preferably less than 0.05 wt.% relative to the total weight of components a) to f).

5. The process according to claims 1-4, wherein the crosslinkable grafting component B and the radical initiator C are continuously dosed to the extruder, preferably as a mixture of components B and C, and mixed into the propylene copolymer composition A wherein the relative amount of radical initiator C relative to the total amount of B and C is preferably less than 25 wt%, more preferably less than 20, 15, 10 or even less than 5 wt% and preferably the amount of component B added is at least 0.5 more preferably at least 1.0 or even 1.5 wt% and preferably typically less than 5.0 wt% relative to the total weight of the composition.

6. The process according to claims 1-5 wherein one or more polyunsaturated components D are used, preferably a unsaturated monomers, preferably divinyl compounds, such as divinylaniline, m-divinylbenzene, p-divinylbenzene, divinylpentane and divinylpropane; allyl compounds, such as allyl acrylate, allyl methacrylate, allyl methyl maleate and allyl vinyl ether; dienes, such as 1,3-butadiene, chloroprene, cyclohexadiene, cyclopentadiene, 2,3-dimethylbutadiene, heptadiene, hexadiene, isoprene and 1,4-pentadiene and mixtures of these unsaturated monomers and wherein preferably apart from the polyunsaturated component D and unsaturated silane component B substantially no other unsaturated components are used in the process.

7. The process according to claims 1-6, further comprising addition of silane condensation catalyst F after the grafting reaction step, preferably in a separate compounding step.

8. The process according to claims 1-7, wherein the extruder is a co-rotating twin-screw extruder having at least six zones, wherein the temperature in a first zone is higher than 90 °C, wherein the temperature in the second zone is higher than 150 °C, wherein the temperature in the third zone is higher than 180 °C, wherein the temperature in the sixth and any subsequent zone is higher than 200 °C, wherein the temperature in any zone is lower than 230 °C, and wherein the residence time of the propylene polymer composition in the co-rotating twin-screw extruder is between 30 - 90 sec.

9. A crosslinkable propylene polymer composition obtainable by the process according to claims 1 - 8, in particular a crosslinkable propylene polymer composition comprising

    a. a heterophasic propylene copolymer composition A,
    b. between 0.1 and 5 wt% component B grafted on said composition A, wherein component B is represented by the formula (I) as described in claim 1

$$R^1SiR^2_qY_{3-q} \qquad (I)$$

    and having
    c. a MFR between 5 and 100 g/10 min,
    d. a XCS between 10 and 40 wt%

e. a rubber Tg beween -70 and -20 °C and matrix Tg between -20 and 25 °C

f. a lowest melting temperature of at least 135 °C

g. a gel content below 1 wt%, preferably below 0.5 more preferably below 0.1 wt%

10. The crosslinkable propylene polymer composition according to claim 9, wherein the melt flow rate MFR is less than 8, preferably 6 or more preferably less than 4 times the MFR of the unmodified random heterophasic propylene copolymer A.

11. The crosslinkable propylene polymer composition according to claims 9 for 10, having an amount of grafted crosslinkable groups B of at least 0.05 wt%, more preferably at least 0.1, even more 0.2 or even 0.4 wt% relative to the weight of the crosslinkable polypropylene polymer.

12. A crosslinked heterophasic propylene polymer composition obtained by contacting the crosslinkable propylene polymer composition according to claims 9 to 11 with moisture, typically a cross-linked heterophasic propylene shaped product obtainable by a process comprising i) providing a crosslinkable propylene polymer composition according to claims 9 to 11, ii) forming the crosslinkable propylene polymer composition into a shaped product and iii) exposing the shaped product to moisture.

13. Use of the cross-linkable propylene polymer composition according to claims 9 to 11 or of the cross-linked heterophasic propylene polymer composition of claim 12 for the manufacture of an adhesive, sealant, foam, coating, film or shaped article.

14. Use of the cross-linked heterophasic propylene shaped product of claim 12 in food packaging, medical devices, textile packaging and technical and protection films.

Figure 1

Figure 2

Europäisches
Patentamt

European
Patent Office

Office européen
des brevets

**EUROPEAN SEARCH REPORT**

Application Number

EP 17 17 3808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/053222 A1 (BASELL POLIOLEFINE SRL [IT]; MOSCARDI GILBERTO [IT]; COSTANTINI ENRICO) 30 April 2009 (2009-04-30) * claims 1,5-13; examples 1-5; tables 1-2 * * page 7, paragraph 2 - page 10, paragraph 5 * ----- | 1-7,9-14 | INV. C08F255/02 C08F230/08 C08K5/54 C08L23/14 C08L51/06 C08J3/24 |
| X | EP 0 619 343 A1 (HIMONT INC [US]) 12 October 1994 (1994-10-12) * claims 1,2,5-7,9; example 1; table 1 * ----- | 1-14 | ADD. C08L23/16 C08K5/5425 C08K5/14 |

|  |  |
|---|---|
|  | TECHNICAL FIELDS SEARCHED (IPC) |
|  | C08F C08K C08L C08J |

The present search report has been drawn up for all claims

| Place of search | Date of completion of the search | Examiner |
|---|---|---|
| Munich | 21 December 2017 | Hollender, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 17 3808

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2017

| Patent document cited in search report | | | Publication date | Patent family member(s) | | | Publication date |
|---|---|---|---|---|---|---|---|
| WO 2009053222 | A1 | | 30-04-2009 | AT | 547467 | T | 15-03-2012 |
| | | | | CN | 101842432 | A | 22-09-2010 |
| | | | | EP | 2203513 | A1 | 07-07-2010 |
| | | | | ES | 2382704 | T3 | 12-06-2012 |
| | | | | US | 2010249256 | A1 | 30-09-2010 |
| | | | | WO | 2009053222 | A1 | 30-04-2009 |
| EP 0619343 | A1 | | 12-10-1994 | BR | 9401385 | A | 18-10-1994 |
| | | | | CA | 2120541 | A1 | 07-10-1994 |
| | | | | DE | 69412323 | D1 | 17-09-1998 |
| | | | | DE | 69412323 | T2 | 15-04-1999 |
| | | | | DK | 0619343 | T3 | 08-02-1999 |
| | | | | EP | 0619343 | A1 | 12-10-1994 |
| | | | | IT | 1264781 | B1 | 10-10-1996 |
| | | | | NO | 941209 | A | 07-10-1994 |
| | | | | RU | 2144051 | C1 | 10-01-2000 |
| | | | | TW | 300910 | B | 21-03-1997 |
| | | | | US | 5536349 | A | 16-07-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1354901 A
- EP 2319885 A
- WO 2015117958 A
- WO 2015117948 A
- US 4413066 A
- US 3646155 A
- WO 2012036846 A
- WO 2000055225 A1
- WO 2009056409 A
- EP 1834987 A
- US 20090143531 A1
- EP 1252233 A
- WO 9823687 A
- WO 2014016205 A
- WO 2013102938 A

**Non-patent literature cited in the description**

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R., TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **SINGH, G. ; KOTHARI, A. ; GUPTA, V.** *Polymer Testing,* 2009, vol. 28 (5), 475
- **RANDALL.** *J. Macromol. Sci., Rev. Macromol. Chem. Phys.,* 1989, vol. C29, 201